(19) Europäisches Patentamt
European Patent Office
Office européen des brevets

(11) **EP 3 084 755 B1**

(12) **FASCICULE DE BREVET EUROPEEN**

(45) Date de publication et mention
de la délivrance du brevet:
**03.06.2020 Bulletin 2020/23**

(21) Numéro de dépôt: **14825337.0**

(22) Date de dépôt: **22.12.2014**

(51) Int Cl.:
*G10K 11/00* *(2006.01)*    *G01S 7/521* *(2006.01)*

(86) Numéro de dépôt international:
**PCT/EP2014/079002**

(87) Numéro de publication internationale:
**WO 2015/092066 (25.06.2015 Gazette 2015/25)**

(54) **ANTENNE OMNIDIRECTIONNELLE COMPACTE POUR UN SONAR TREMPÉ**

KOMPAKTE OMNIDIREKTIONALE ANTENNE FÜR EIN EINTAUCH-SONAR

COMPACT OMNIDIRECTIONAL ANTENNA FOR A DIPPING SONAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2013 FR 1303023**

(43) Date de publication de la demande:
**26.10.2016 Bulletin 2016/43**

(73) Titulaire: **Thales**
**92400 Courbevoie (FR)**

(72) Inventeurs:
• **SEITE, François**
**29238 Brest (FR)**
• **BILLON, Didier**
**29200 Brest (FR)**
• **SERNIT, Eric**
**06700 Saint Laurent Du Var (FR)**
• **LARDAT, Raphaël**
**06330 Roquefort-les-Pins (FR)**
• **LAGIER, Yves**
**06560 Sophia Antipolis (FR)**
• **ANDREIS, Daniel**
**06210 Mandelieu La Napoulie (FR)**

(74) Mandataire: **Collet, Alain**
**Marks & Clerk France**
**Conseils en Propriété Industrielle**
**Immeuble Visium**
**22, Avenue Aristide Briand**
**94117 Arcueil Cedex (FR)**

(56) Documents cités:
FR-A1- 2 604 530        FR-A1- 2 776 161
GB-A- 2 093 996         US-A- 4 305 141
US-A1- 2004 052 160

EP 3 084 755 B1

**Description**

La présente invention concerne le domaine général de la détection sonar notamment mise en œuvre dans la lutte anti sous-marine. Elle concerne plus particulièrement le domaine des sonars aéroportés dits "sonars trempés" mis en œuvre depuis un hélicoptère.

Dans le cadre d'activités de lutte anti sous-marine, pour pouvoir détecter des sous-marins en immersion dans une zone donnée, on a généralement recours à l'utilisation de sonars, en particulier de sonars actifs. Dans ce contexte, le déploiement de sonars à partir de plateformes aériennes, avions ou hélicoptères, s'avère particulièrement efficace car de telles plateformes présentent une grande mobilité par rapport aux sous-marins.

Ainsi des avions de patrouille maritime déploient des bouées acoustiques, composées de capteurs et parfois d'émetteurs acoustiques et d'un système VHF agissant comme un relais de communication vers l'aéronef.

De façon analogue, des hélicoptères peuvent être également utilisés pour mettre en œuvre des émetteurs et récepteurs sonars reliés par un câble à leur plateforme, autrement dit à l'hélicoptère. On parle alors de "Sonars trempés". Par la suite, le sous ensemble immergé et relié par le câble est appelé antenne. Il comprend les émetteurs et les récepteurs sonars proprement dits et éventuellement des équipements électroniques associés aux émetteurs et récepteurs. Il peut comprendre également des capteurs d'environnement.

La mise à l'eau depuis la plateforme, le contrôle en immersion ainsi que la récupération à bord de ces antennes sont effectués au moyen d'un treuil situé à l'intérieur de l'hélicoptère. En plus d'une fonction de déploiement et de récupération de l'antenne, le câble du treuil véhicule généralement les signaux sonar ainsi que l'énergie électrique nécessaire à l'émission acoustique et au fonctionnement des récepteurs. De plus, à bord de l'hélicoptère, on trouve des équipements nécessaires à la génération des signaux acoustiques et au traitement des données acoustiques reçues.

La discrétion acoustique accrue des sous-marins modernes a nécessité une évolution des techniques de détection employées, vers des sonars de forte puissance fonctionnant à basse fréquence. Cette évolution se traduit par une augmentation des dimensions et de la masse des différents sous ensembles formant le sonar. Par exemple pour l'antenne, le fait d'abaisser sa fréquence de fonctionnement tend à augmenter ses dimensions. On a par exemple développé des antennes dans lesquelles des récepteurs d'ondes sonores ou hydrophones sont disposés sur des bras que l'on déploie lors du fonctionnement. Entre les phases de fonctionnement du sonar, les bras sont repliés et l'antenne, remontée par le treuil, dans une position dite de stockage, prend place à l'intérieur de l'hélicoptère. Il est quelque fois difficile de loger tous les sous ensembles d'un sonar à l'intérieur d'un hélicoptère. L'antenne, généralement cylindrique pour être omnidirectionnelle en gisement et directive en site, est pendue par le câble qui la porte. La plus grande dimension verticale du sonar est contrainte par la hauteur de l'antenne à laquelle il faut ajouter l'accrochage du câble au sommet de l'antenne et au moins en partie une poulie du treuil dont le diamètre est fonction du rayon de courbure minimale que le câble peut subir. Cette dimension doit pouvoir rentrer en hauteur dans l'hélicoptère.

Concernant l'augmentation de masse des sous ensembles du sonar, celle-ci impacte la durée des missions qu'un porteur peut effectuer avec son sonar.

Le document US 2004/052160 A1 décrit un sonar de coque dans lequel une antenne de réception est située autour d'une antenne d'émission.

Le document US 4 305 141 A décrit une antenne pour sonar trempé comprenant deux zones distinctes superposées : une zone comprenant des anneaux d'émission et une zone comprenant des hydrophones.

Les documents FR 2 604 530 A1 et GB 2 093 996 A décrivent une antenne de sonar trempé dans laquelle des hydrophones sont montés sur des bras mobiles.

L'invention vise à réduire l'encombrement et la masse de certains sous-ensembles d'un sonar trempé, notamment la masse et la hauteur de l'antenne tout en conservant des performances acoustiques analogues. L'invention vise aussi à réduire la complexité de certains sous-ensembles, notamment de l'antenne. Plus précisément l'invention permet de se passer de bras articulés portant les hydrophones. En évitant de telles pièces mobiles, la fiabilité du sonar s'en trouve améliorée.

A cet effet, l'invention a pour objet une antenne omnidirectionnelle destinée à équiper un sonar trempé, selon la revendication 1.

La portée d'une antenne sonar est liée à la fréquence de travail des hydrophones. Une antenne conforme à l'invention fonctionne à une fréquence de travail inférieure à 8 kHz. Autrement dit, les anneaux élémentaires d'émission et les hydrophones fonctionnent à une fréquence de travail inférieure à 8 kHz. Avantageusement, on peut descendre à des fréquences inférieures à 6 kHz voire même inférieure à 4 kHz.

Il existe des composants acoustiques couramment appelés « Tonpilz » permettant de réaliser à la fois l'émission et la réception d'ondes sonores. Pour des fréquences inférieures à 8 kHz ce type de composant serait beaucoup trop volumineux et l'antenne serait inadaptée à un sonar trempé, notamment embarqué à bord d'un hélicoptère. Pour travailler en basse fréquence, il est avantageux de distinguer les anneaux d'émission des hydrophones.

Dans l'art antérieur des antennes sonar trempé basse fréquence, notamment dans les antennes cylindriques, les anneaux d'émission occupent un volume distinct de celui des hydrophones. On entend par volume, un espace au contour convexe. Au contraire, selon l'invention les anneaux élémentaires d'émission et les hydrophones sont imbriqués, c'est-à-dire, que les volumes occupés par les anneaux d'émission et le volume occupé par les hydrophones ont des parties communes. La répartition des hydrophones et des anneaux d'émission peut être régulière ou non. Le fait d'imbriquer les anneaux élémentaires d'émission et les anneaux d'hydrophones permet de répartir les émetteurs et les récepteurs acoustiques chacun sur un plus grand volume.

Plus précisément, on définit un premier volume minimal cylindrique occupé par les anneaux élémentaires d'émission et un second volume minimal cylindrique occupé par les hydrophones. Ces deux volumes sont les plus petits cylindres possibles incluant les anneaux d'émission ou les hydrophones.

Avantageusement, les projections des centres de phase des hydrophones dans un plan horizontal perpendiculaire à l'axe longitudinal ou dans un plan vertical contenant l'axe longitudinal sont espacées de moins de $\lambda/3$, $\lambda$ étant la longueur d'onde à la fréquence de travail. La réduction de la distance entre hydrophones dans un plan horizontal permet d'améliorer la directivité de l'antenne en gisement et entre hydrophones dans un plan vertical permet d'améliorer la directivité de l'antenne en site. En fonction de la mission à laquelle l'antenne est destinée, on peut choisir de privilégier l'une ou l'autre des directivités. Il est bien entendu possible de réduire la distance entre hydrophones dans les deux plans.

L'invention a également pour objet un sonar comprenant une antenne selon l'invention. Avantageusement, le sonar comprend un calculateur configuré pour réaliser une formation de voie sonar, des paramètres de la formation de voie étant calculés à partir de la covariance d'un bruit spatialement corrélé selon un formalisme de traitement adaptatif robuste vis-à-vis des erreurs de calibration de l'antenne.

Il est bien entendu que l'invention n'est pas limitée à un sonar équipant un hélicoptère. Le porteur équipé d'un sonar trempé conforme à l'invention peut être de toute nature. En réduisant la masse d'un sonar trempé, il est par exemple possible d'équiper un drone avec un sonar selon l'invention.

L'invention sera mieux comprise et d'autres avantages apparaîtront à la lecture de la description détaillée d'un mode de réalisation donné à titre d'exemple, description illustrée par le dessin joint dans lequel :

    la figure 1 représente un hélicoptère équipé d'un sonar trempé ;
    les figures 2a, 2b, 2c et 2d représentent un premier mode de réalisation d'une antenne appartenant au sonar de la figure 1 ;
    la figure 3 représente un second mode de réalisation d'une antenne appartenant au sonar de la figure 1 ;
    la figure 4 représente un troisième mode de réalisation d'une antenne appartenant au sonar de la figure 1.

Par souci de clarté, les mêmes éléments porteront les mêmes repères dans les différentes figures.

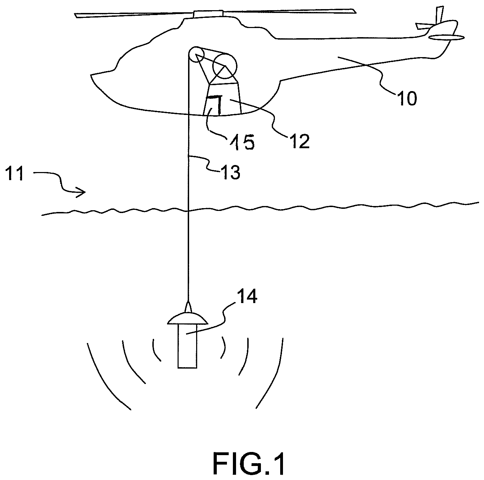

La figure 1 représente un hélicoptère 10 en vol stationnaire au dessus de l'eau. L'hélicoptère 10 est équipé d'un sonar actif trempé 11. Ce type de sonar permet notamment la détection et la classification d'objets sous-marins.

Le sonar 11 comprend essentiellement un treuil 12 installé à bord de l'hélicoptère 10, un câble 13 et une antenne 14 omnidirectionnelle, représentée immergée sur la figure 1. L'antenne 14 est suspendue au câble 13 et le treuil 12 permet de dérouler et d'enrouler le câble 13 en fonction de la profondeur à laquelle on souhaite immerger l'antenne 14. Le treuil permet également de remonter l'antenne 14 à l'intérieur de l'hélicoptère 10. Le sonar 11 comprend également des équipements électroniques non représentés et embarqués à bord de l'hélicoptère 10. Les équipements permettent de faire fonctionner le sonar, notamment pour la génération d'onde sonores et pour l'exploitation des ondes reçues en écho des ondes émises. Les équipements permettent également d'alimenter l'antenne 14 en énergie électrique.

Le câble 13 assure une double fonction, tout d'abord un support mécanique de l'antenne 14 et ensuite une liaison électrique entre les équipements électroniques disposés à bord de l'hélicoptère 10 et l'antenne 14. Dans la liaison électrique, on englobe l'alimentation en énergie et la transmission de données vers l'antenne 14 ou en provenance de celle-ci. A titre d'alternative, il est possible de réaliser une antenne 14 autonome sans liaison électrique avec le porteur, le câble étant alors uniquement porteur. L'antenne 14 dispose alors de sa propre source d'énergie électrique, par exemple sous forme d'une batterie. Des moyens de transmission de données, par exemple par onde radio, peuvent être mis en œuvre.

Le sonar 11 comprend un calculateur 15, par exemple disposé au pied du treuil 12. Le calculateur 15 est configuré pour générer les données transmises à l'antenne 14 et pour traiter les données issues de l'antenne 14. Le calculateur 15 est notamment configuré pour réaliser une formation de voie sonar. Le calculateur 15 est connecté au câble 13 par exemple au travers d'un collecteur tournant placé sur le treuil 12. Le calculateur 15 est avantageusement connecté à un écran permettant de visualiser une image sonar. Le calculateur 15 comprend par exemple une mémoire contenant des instructions et un processeur apte à mettre en œuvre les instructions permettant de calculer la formation de voie sonar.

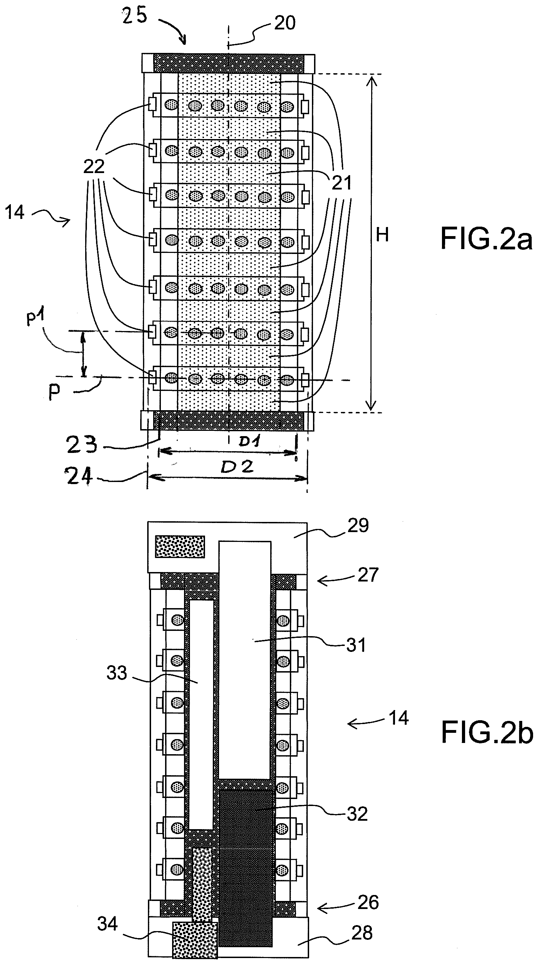

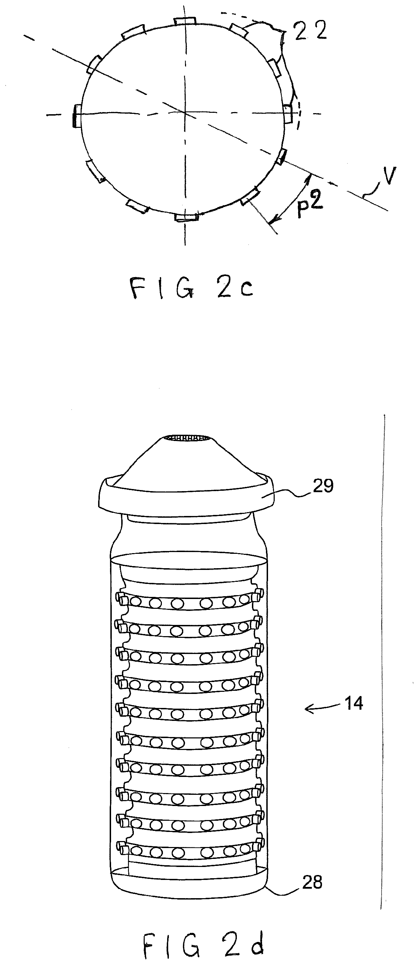

Les figures 2a, 2b, 2c et 2d représentent un premier mode de réalisation de l'antenne 14. La figure 2a représente une vue schématique externe de la partie active de l'antenne 14. Les figures 2b et 2c représentent schématiquement en coupe l'antenne 14 et la figure 2d représente en perspective l'antenne 14.

L'antenne 14 est essentiellement cylindrique. Elle s'étend selon un axe longitudinal 20. Lorsque l'antenne 14 est suspendue par son propre poids au câble 13, ce dernier s'étend également selon l'axe longitudinal 20.

La partie active de l'antenne 14 est formée d'émetteurs et de récepteurs sonores. Les émetteurs sont formés d'anneaux élémentaires d'émission d'ondes sonores 21 formés autour de l'axe 20 et les récepteurs sont formés d'hydrophones 22 répartis en anneaux formés autour de l'axe 20. Un exemple de réalisation des anneaux élémentaires d'émission 21 est par exemple décrit dans le brevet EP 0 799 097 B1. Les hydrophones 22 sont répartis autour de l'axe 20 de façon uniforme. Les hydrophones 22 sont par exemple isolés dans une résine à base polyuréthane ou immergés dans un bain d'huile contenu dans une enveloppe souple.

Selon l'invention, les anneaux élémentaires d'émission 21 et les anneaux d'hydrophones 22 sont répartis le long d'une même hauteur H mesurée selon l'axe longitudinal 20. Cette répartition sur toute la hauteur H permet pour les hydrophones d'améliorer la directivité de réception acoustique en site.

La figure 2b représente l'antenne 14 en coupe dans un plan V contenant l'axe longitudinal 20, appelé plan vertical, et la figure 2c représente l'antenne 14 en coupe dans un plan P perpendiculaire à l'axe longitudinal 20, appelé plan horizontal.

On peut définir un pas p1 séparant deux hydrophones 22 voisins dans un même plan vertical contenant l'axe longitudinal 20. Sur la figure en coupe 2c apparait un anneau de 12 hydrophones 22 répartis de façon régulière sur le périmètre de l'anneau. Les différents anneaux d'hydrophones sont avantageusement identiques. On définit un pas p2 séparant deux hydrophones voisins dans un même anneau. Le pas p2 sépare les centres de phase de chacun des hydrophones 22. Il est défini par la longueur de la corde sur le périmètre de l'anneau séparant deux hydrophones voisins. Les pas p1 et p2 sont avantageusement réguliers. Il est toutefois possible d'opter pour une répartition irrégulière des pas p1 et p2.

Dans l'exemple représenté sur les figures 2a, 2b, 2c et 2d, les anneaux 21 et 22 sont alternés. Plus précisément, les anneaux élémentaires d'émission 21 et les anneaux d'hydrophones 22 ont sensiblement les mêmes dimensions, en diamètre autour de l'axe 20. Les anneaux élémentaires d'émission 21 et les anneaux d'hydrophones 22 sont empilés alternativement les uns sur les autres.

Le plus petit volume cylindrique d'axe 20 appelé volume minimal occupé par les anneaux élémentaires d'émission 21 porte la référence 23. Son diamètre autour de l'axe 20 est repéré D1. Le plus petit volume cylindrique d'axe 20 appelé volume minimal occupé par les hydrophones 22 porte la référence 24. Son diamètre autour de l'axe 20 est repéré D2. Les diamètres D1 et D2 sont dans un rapport inférieur à 30%. Autrement dit, la différence en valeur absolue entre les deux diamètres D1 et D2 reste inférieure à 30% du plus petit des deux diamètres D1 ou D2. Dans l'exemple représenté, Le diamètre D1 est inférieur au diamètre D2. On a donc :

$$(D2 - D1) / D1 < 30\%$$

Avantageusement, afin d'améliorer l'hydrodynamisme de l'antenne ce rapport peut être inférieur à 20%, même à 10% et idéalement inférieur à 5%.

Le rapport de diamètre des deux volumes 23 et 24 est constant que l'antenne soit en opération ou dans une position de stockage. Autrement dit, l'antenne ne comprend aucun bras dépliant comme dans l'art antérieur connu pour ce type d'antenne fonctionnant en basse fréquence.

Avantageusement, les anneaux élémentaires d'émission 21 et les anneaux d'hydrophones 22 forment un tube 25 s'étendant selon l'axe longitudinal 20 entre deux extrémités 26 et 27. Le tube possède le diamètre le plus grand, D1 ou D2 (D2 dans l'exemple représenté) et est limité par la hauteur H. L'antenne 14 comprend deux structures 28 et 29 fermant le tube 25, chacune à l'une des extrémités 26 et 27 du tube 25. L'intérieur du tube 25 est alors isolé du milieu dans lequel l'antenne 14 est plongée. Pour assurer une bonne étanchéité du tube 25 sur sa surface extérieure et également pour assurer une protection mécanique des anneaux élémentaires d'émission 21 et des anneaux d'hydrophones 22, la surface extérieure cylindrique du tube 25 peut être recouverte d'un matériau élastomère tel que par exemple un matériau à base de polyuréthane. Les deux structures 28 et 29 peuvent être des pièces métalliques monobloc, par exemple réalisées dans un alliage d'aluminium moulé. La structure supérieure 29 peut comporter des ailettes verticales permettant d'améliorer l'hydrodynamisme de l'antenne 14 lors de ses mouvements dans l'eau, notamment à la descente et à montée, lorsque le treuil 12 est en action.

Lorsque l'intérieur des anneaux élémentaires d'émission 21 est isolé du milieu dans lequel l'antenne 14 est plongée, les anneaux d'émission 21 fonctionnent selon une technologie où de l'air est situé à l'intérieur des anneaux 21. Cette technologie est connue dans la littérature anglo-saxonne sous le nom de « Air Backed Ring » ou ABR.

Lorsque le tube 25 est fermé à ses deux extrémités, il forme une enceinte étanche à l'intérieure de laquelle on peut disposer des équipements électroniques. A titre l'exemple, l'antenne 14 comprend un émetteur électronique 31 relié aux anneaux élémentaires d'émission 21 et un récepteur électronique 32 relié aux hydrophones 22. L'émetteur 31 et le récepteur 32 sont disposés à l'intérieur du tube 25. D'autres composants peuvent être disposés à l'intérieur du tube 25, comme par exemple une batterie 33. On peut aussi placer à l'intérieur du tube 25 des capteurs d'environnement 34.

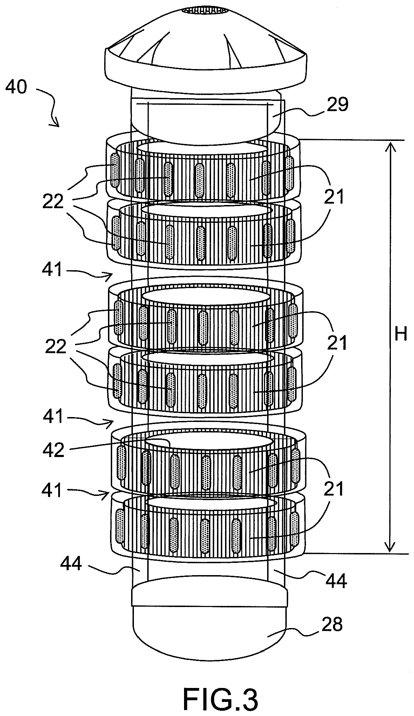

La figure 3 représente un second mode de réalisation d'une antenne 40 conforme à l'invention. Dans ce mode de réalisation, les hydrophones 22 sont disposés concentriquement sur chacun des anneaux élémentaires d'émission 21. Un anneau élémentaire d'émission 21 est situé à l'intérieur d'un anneau d'hydrophones 22. Les anneaux élémentaires d'émission 21 et les anneaux d'hydrophones 22 sont, comme dans le premier mode de réalisation, répartis le long de la hauteur H.

Il est possible de disposer les anneaux élémentaires d'émission 21 en contact les uns avec les autres. Les anneaux élémentaires d'émission 21 occupent alors toute la hauteur H. Il en est de même pour les anneaux d'hydrophones 22. On obtient ainsi une antenne 40 très compacte en hauteur. Dans cette disposition, le tube 25 peut, comme précédemment, être étanche et l'intérieur du tube 25 peut être utilisé pour y disposer des équipements électroniques. Les anneaux élémentaires d'émission 21 fonctionnent alors selon la technologie ABR.

Alternativement, dans ce second mode de réalisation, des parois internes des anneaux élémentaires d'émission 21 sont en contact avec un fluide à l'état liquide. Ce liquide peut être enfermé à l'intérieur du tube 25. La présence de liquide permet d'améliorer les performances acoustiques de l'antenne. Pour bénéficier des avantages de la présence d'un liquide sans augmenter la masse de l'antenne, il est possible de laisser l'eau dans laquelle l'antenne 14 est plongée venir au contact des parois internes des anneaux élémentaires d'émission 21. A cet effet, l'antenne 40 comprend des ouvertures 41 disposées entre les anneaux élémentaires d'émission 21. Ces ouvertures permettent à l'eau, dans laquelle l'antenne 40 est trempée, de circuler le long de parois internes 42 des anneaux élémentaires d'émission 21. Ainsi, lorsque l'antenne 14 n'est pas immergée, l'eau baignant l'intérieur de l'antenne disparait et ne vient pas augmenter la masse de l'antenne. Lorsque l'intérieur des anneaux élémentaires d'émission 21 est baigné dans le milieu dans lequel l'antenne 40 est plongée, les anneaux d'émission 21 fonctionnent selon une technologie ou de l'eau circule librement autour de l'anneau d'émission 21. Cette technologie est connue dans la littérature anglo-saxonne sous le nom de « Free Flooded Ring » ou FFR.

Pour permettre la présence des ouvertures 41, l'antenne 40 comprend plusieurs montants 44 reliant les deux structures 28 et 29. Les anneaux d'émission 21 sont fixés sur les montants 44.

Sur la figure 3, les ouvertures 41 sont radiales. Il est également possible de réaliser ces ouvertures dans les structures 28 et 29.

En mettant en œuvre la technologie FFR, l'espace interne des anneaux d'émission 21 n'est plus disponible pour y disposer des équipements électroniques qui peuvent être placés dans des compartiments étanches réalisés dans les structures 28 et 29.

La technologie FFR peut être mise en œuvre dans le premier mode de réalisation représenté à l'aide des figures 2a, 2b et 2c en prévoyant une ou plusieurs ouvertures permettant de faire communiquer l'intérieur du tube 25 et l'extérieur.

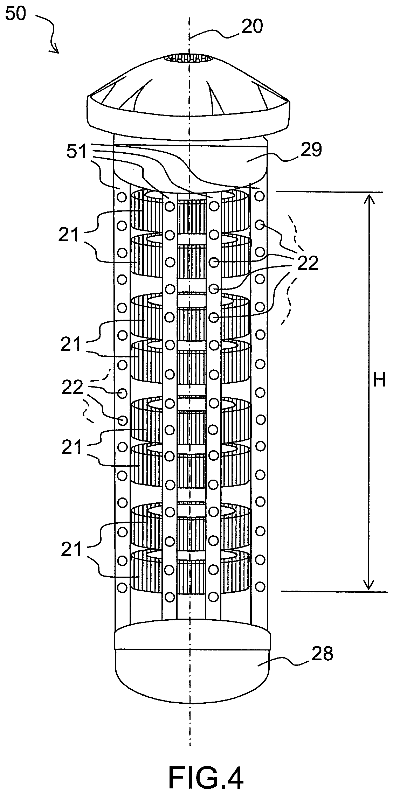

La figure 4 représente un troisième mode de réalisation d'une antenne 50 conforme à l'invention. On retrouve les anneaux d'émission 21 et les deux structures 28 et 29. Dans ce mode de réalisation, les hydrophones 22 ne sont pas disposés en anneaux mais sur des barreaux 51 fixés aux anneaux d'émission 21. Les barreaux 51 peuvent être parallèles à l'axe longitudinal 20. Dans ce mode de réalisation, il est possible de conserver les montants 44 distincts des barreaux 51. Alternativement, les barreaux 51 peuvent être utilisés pour relier les deux structures 28 et 29 et remplacer les montants 44. Les barreaux 51 peuvent être disposés à l'intérieur ou à l'extérieur des anneaux d'émission 21.

Dans les différents modes de réalisation et notamment ceux mettant en œuvre la technologie FFR, il est possible de caréner l'antenne afin d'améliorer son comportement hydrodynamique.

L'abandon du principe d'antenne déployable entraîne une réduction du diamètre de l'antenne 14, donc un élargissement du lobe principal du diagramme de directivité de la voie formée en sommant les signaux issus des hydrophones 22 après compensation des retards de propagation pour un signal arrivant dans la direction de consigne. A 4 kHz, la largeur à -3 dB de ce diagramme dans un plan horizontal perpendiculaire à l'axe 20 passe ainsi de 22° à 52°, quand on passe d'une antenne cylindrique de diamètre 700 mm constituée de 12 bras déployables à une antenne compacte à géométrie cylindrique fixe de diamètre 300 mm et constituée de 12 colonnes telle que décrite dans la présente invention. Une telle dégradation de la résolution en gisement pose un problème car elle se traduit non seulement par un moindre rapport signal sur bruit en sortie de formation de voie, environ -3 dB en bruit isotrope si les bras de l'antenne déployables et les colonnes de l'antenne compacte sont chacun constitués de 4 hydrophones espacées de 160 mm le long de l'axe vertical 20, mais aussi d'une perte en précision de localisation angulaire d'une cible proche d'un facteur 3.

Dans l'invention, on tire parti du fait que le pas horizontal dans un sous-réseau est très inférieur à la demi-longueur d'onde, et qu'en conséquence le bruit ambiant sur deux hydrophones voisins est fortement corrélé, pour réaliser une formation de voie qui maximise le rapport signal sur bruit, une telle formation de voie étant différente de la formation de voie conventionnelle précédente qui maximise le rapport signal sur bruit quand le bruit est spatialement décorrélé. Les coefficients complexes de la formation de voie effectuée en bande de base peuvent être calculés à partir de la matrice de covariance du bruit selon le formalisme bien connu du traitement d'antenne adaptatif. Selon l'art connu, la matrice de covariance peut soit être calculée à partir de la distribution angulaire supposée du bruit ambiant, soit estimée à partir des signaux de l'antenne. Par rapport au traitement conventionnel, qui est la cas particulier de ce traitement pour une matrice de covariance du bruit égale au produit de la matrice identité et de la puissance du bruit en sortie d'un hydrophone, le gain en rapport signal sur bruit isotrope, c'est-à-dire le gain de directivité, est augmenté de 5 dB et l'ouverture à -3 dB du diagramme de directivité dans le plan horizontal est ramenée à 23°, ce qui amène la gain de directivité de l'antenne compacte à 2 dB au-dessus de celui de l'antenne déployable. Le même traitement adaptatif sur l'antenne déployable ne fait gagner qu'à peine plus de 1 dB en raison de la faible corrélation spatiale du bruit sur cette antenne dont le pas entre hydrophones est voisin de la demi-longueur d'onde.

Dans l'art connu du sonar, des groupes d'un petit nombre d'hydrophones ont un pas inférieur à la demi-longueur d'onde et leurs signaux sont combinés au moyen d'une formation de voie de type cardioïde dont le diagramme de directivité a des zéros dans des directions prédéterminées. Une antenne peut être constituée de plusieurs groupes de ce type, le pas entre groupes ayant une valeur proche de la demi-longueur d'onde à la fréquence la plus élevée dans la bande du sonar. Dans l'invention, le pas horizontal p2 entre deux hydrophones voisins est avantageusement inférieur au tiers de la longueur d'onde $\lambda/3$, il est d'environ $\lambda/5$ dans l'exemple ci-dessus, ainsi que le pas p1 entre hydrophones voisins d'une même colonne verticale. Pour la mesure du pas entre hydrophones, on considère les projections des centres de phase des hydrophones respectifs. La longueur d'onde peut varier en fonction de nombreux paramètres tels que la température et la pression de l'eau. Pour la définition géométrique du pas entre hydrophones, on considère que la vitesse c d'une onde sonore dans l'eau est de 1500m/s. La longueur d'onde $\lambda$ est donnée par la formule $\lambda = c/f$. Pour une antenne à section circulaire, le pas horizontal entre deux hydrophones est la longueur de la corde entre deux hydrophones voisins sur le diamètre considéré. Pour une fréquence de travail de 4kHz, la longueur d'onde est de 0,375m. Pour cette fréquence de travail, le pas horizontal entre deux hydrophones voisins est donc avantageusement inférieur à $\lambda/3$, c'est-à-dire : 0,125m. Pour une antenne compacte de 300mm de diamètre travaillant à 4kHz et possédant 12 hydrophones 22 dans chaque plan horizontal, on obtient un pas de l'ordre de 0,08m, c'est à dire de l'ordre de $\lambda/5$.

Si les colonnes de l'antenne compacte de notre exemple sont constituées de 7 hydrophones au pas de 80 mm au lieu de 4 hydrophones au pas de 160 mm comme nous l'avons d'abord supposé, la hauteur entre les deux hydrophones extrêmes d'une colonne restant égale à 480 mm, le gain par rapport au traitement conventionnel du traitement optimisé vis-à-vis de la corrélation spatiale d'un bruit ambiant isotrope devient supérieur à 6 dB.

Le gain de directivité dû au resserrement du pas entre hydrophones et à la prise en compte de la corrélation spatiale du bruit isotrope dans le calcul des coefficients de formation de voie est particulièrement sensible aux erreurs de calibration de l'antenne. Une formation de voie avec des coefficients calculés selon le même formalisme que celui optimal pour une antenne parfaitement calibrée donne alors une performance qui peut être inférieure à celle du traitement conventionnel, raison pour laquelle ce type d'antenne n'a pas été employé jusqu'à maintenant. Dans l'invention, on peut remédier à cette sensibilité au moyen d'un calcul des coefficients qui vise à en atténuer l'effet négatif selon un formalisme de traitement dit « adaptatif robuste » qui reste basé sur la matrice de covariance du bruit mais tient compte de l'incertitude sur la réponse de l'antenne dans la direction de la voie. Il existe plusieurs variantes de calcul des coefficients. On peut par exemple utiliser le traitement décrit dans l'article « On Robust Capon Beamforming and Diagonal Loading » de Jian LEE publié le 7 juillet 2003 (IEEE Transactions on signal processing, Vol. 51 NO. 7). Par rapport au cas idéal où la calibration de l'antenne est parfaite et pour des erreurs de calibration réalistes, par exemple d'écart type 1 dB en gain et 10° en phase, on perd dans l'exemple précédent l'avantage en gain de directivité de l'antenne compacte de diamètre 300 mm constituée de 12 colonnes de 7 hydrophones sur l'antenne déployable de diamètre 700 mm constituée de 12 bras portant chacun 4 hydrophones, les deux antennes ayant alors des gains de directivité quasi équivalents.

## Revendications

1. Antenne omnidirectionnelle destinée à équiper un sonar trempé (11), l'antenne (14 ; 40, 50) comprenant plusieurs anneaux élémentaires d'émission (21) formés autour d'un axe longitudinal (20) de l'antenne (14 ; 40 ; 50) et plusieurs hydrophones (22) répartis autour de l'axe longitudinal (20), l'antenne (14 ; 40 ; 50) étant destinée à être trempée dans de l'eau, les hydrophones (22) étant distincts des anneaux élémentaires d'émission (21), les hydrophones (22) et les anneaux élémentaires d'émission (21) étant fixés les uns aux autres dans l'antenne (14 ; 40 ; 50), un premier volume minimal cylindrique (23) autour de l'axe longitudinal (20) occupé par les anneaux élémentaires d'émission (21) étant de diamètre D1, un second volume minimal cylindrique (24) autour de l'axe longitudinal (20) occupé par les hydrophones (22) étant de diamètre D2, le rapport de diamètre des deux volumes étant constant que l'antenne (14 ; 40, 50) soit en opération ou dans une position de stockage, **caractérisée en ce que** les anneaux élémentaires d'émission (21) et les hydrophones (22) sont imbriqués le long d'une même hauteur (H) mesurée selon l'axe longitudinal (20) **en ce que** les anneaux élémentaires d'émission (21) et les hydrophones (22) fonctionnent à une fréquence de travail inférieure à 8 kHz,

**en ce que** la différence en valeur absolue entre les deux diamètres D1 et D2 reste inférieure à 30% du plus petit des deux diamètres D1 ou D2,

et **en ce que** les projections des centres de phase des hydrophones (22) dans un plan horizontal (P) perpendiculaire à l'axe longitudinal (20) ou dans un plan vertical (V) contenant l'axe longitudinal (20) sont espacées d'un pas de moins de λ/3, λ étant la longueur d'onde à la fréquence de travail, les hydrophones (22) étant répartis en anneaux formés autour de l'axe longitudinal (20), dans la plan horizontal (P), le pas (p2) dit pas horizontal entre deux hydrophones (22) est la longueur de la corde entre deux hydrophones voisins sur le diamètre considéré.

2. Antenne selon la revendication 1, **caractérisée en ce que** les hydrophones (22) sont disposés sur des barreaux (51) fixés aux anneaux d'émission (21).

3. Antenne selon la revendication 1, **caractérisée en ce que** hydrophones (22) sont répartis en anneaux formés autour de l'axe longitudinal (20).

4. Antenne selon la revendication 3, **caractérisée en ce que** les anneaux élémentaires d'émission (21) et les anneaux d'hydrophones (22) sont alternés sur la hauteur (H).

5. Antenne selon l'une quelconque des revendications 1 à 3, **caractérisée en ce que** les hydrophones (22) sont superposés aux anneaux élémentaires d'émission (21).

6. Antenne selon l'une quelconque des revendications 3 ou 4, **caractérisée en ce que** les anneaux élémentaires d'émission (21) et les anneaux d'hydrophones (22) forment un tube (25) s'étendant selon l'axe longitudinal (20) entre deux extrémités (26, 27), **en ce que** l'antenne (14, 40, 50) comprend deux structures (28, 29) fermant le tube (25), chacune à l'une des extrémités (26, 27) du tube (25).

7. Antenne selon l'une quelconque des revendications 1 à 5, **caractérisée en ce que** des parois internes des anneaux élémentaires d'émission (21) sont en contact avec un fluide à l'état liquide.

8. Antenne selon la revendication 7, **caractérisée en ce qu'**elle comprend des ouvertures (41) permettant à l'eau dans laquelle l'antenne (40) est trempée de circuler le long de parois internes des anneaux élémentaires d'émission (21).

9. Antenne selon la revendication 8, **caractérisée en ce que** les ouvertures (41) sont disposées entre les anneaux d'émission (21).

10. Sonar trempé (11) comprenant un câble (13) et une antenne (14) selon l'une des revendications précédentes, l'antenne (14 ; 40, 50) étant suspendue au câble (13).

11. Sonar trempé (11) selon la revendication 10, **carac-** **térisé en ce qu'**il comprend en outre un treuil (12) permettant d'enrouler et de dérouler le câble (13).

12. Sonar trempé (11) comprenant un calculateur (15) et une antenne (14) selon l'une des revendications 1 à 9, le calculateur (15) étant configuré pour réaliser une formation de voie sonar, des paramètres de la formation de voie étant calculés à partir de la covariance d'un bruit spatialement corrélé selon un formalisme de traitement adaptatif robuste vis-à-vis des erreurs de calibration de l'antenne (14).

**Patentansprüche**

1. Omnidirektionnelle Antenne, dafür bestimmt, einen Tauchsonar (11) auszurüsten, wobei die Antenne (14; 40, 50) mehrere elementare Senderinge (21), welche um eine Längsachse (20) der Antenne (14; 40; 50) gebildet sind und mehrere um die Längsachse (20) verteilte Hydrophone (22) beinhaltet, wobei die Antenne (14; 40; 50) dazu bestimmt ist, in Wasser eingetaucht zu werden, wobei die Hydrophone (22) sich von den elementaren Senderingen (21) unterscheiden, wobei die Hydrophone (22) und die elementaren Senderinge (21) aneinander in der Antenne (14; 40; 50) befestigt sind, wobei ein erstes minimales zylindrisches Volumen (23) um die Längsachse (20), die durch elementaren Senderinge (21) eingenommen wird, einen Durchmesser D1 aufweist, wobei ein zweites minimales zylindrisches Volumen (24) um die Längsachse (20), die durch die Hydrophone (22) eingenommen wird, einen Durchmesser D2 aufweist, wobei das Durchmesserverhältnis der beiden Volumina konstant ist, unabhängig davon, ob die Antenne (14; 40, 50) in Betrieb ist oder in einer Lagerungsposition ist, **dadurch gekennzeichnet, dass** die elementaren Senderinge (21) und die Hydrophone (22) über eine gleiche Höhe (H) verschachtelt sind, gemessen entlang der Längsachse (20), und dass die elementaren Senderinge (21) und die Hydrophone (22) bei einer Arbeitsfrequenz unter 8 kHz arbeiten, dadurch, dass die Absolutwertdifferenz zwischen den beiden Durchmessern D1 und D2 kleiner bleibt als 30 % des kleineren der beiden Durchmesser D1 oder D2, und dadurch, dass die Projektionen der Phasenmittelpunkte der Hydrophone (22) in einer horizontalen Ebene (P), welche rechtwinklig zur Längsachse (20) ist oder in einer vertikalen Ebene (V), welche die Längsachse (20) enthält, um einen Abstand von unter λ/3 beabstandet sind, wobei λ die Wellenlänge bei der Arbeitsfrequenz ist, wobei die Hydrophone (22) in um die Längsachse (20) gebildeten Ringen in der horizontalen Ebene (P) verteilt sind, wobei der horizontaler Abstand genannte Abstand (p2) zwischen zwei Hydrophonen (22) die Sehnenlänge zwischen zwei benachbarten Hydrophonen an dem betrachteten Durchmesser ist.

2. Antenne nach Anspruch 1, **dadurch gekennzeichnet, dass** die Hydrophone (22) an an den Senderingen (21) befestigten Sprossen (51) angeordnet sind.

3. Antenne nach Anspruch 1, **dadurch gekennzeichnet, dass** die Hydrophone (22) in um die Längsachse (20) gebildeten Ringen verteilt sind.

4. Antenne nach Anspruch 3, **dadurch gekennzeichnet, dass** die elementaren Senderinge (21) und die Hydrophonringe (22) sich über die Höhe (H) abwechseln.

5. Antenne nach einem der Ansprüche 1 bis 3, **dadurch gekennzeichnet, dass** die Hydrophone (22) die elementaren Senderinge (21) überlagern.

6. Antenne nach einem der Ansprüche 3 oder 4, **dadurch gekennzeichnet, dass** die elementaren Senderinge (21) und die Hydrophonringe (22) eine Röhre (25) bilden, welche sich entlang der Längsachse (20) zwischen zwei Enden (26, 27) erstreckt, und dadurch, dass die Antenne (14, 40, 50) zwei Strukturen (28, 29) beinhaltet, welche die Röhre (25) verschließen, jeweils eine an einem der Enden (26, 27) der Röhre (25).

7. Antenne nach einem der Ansprüche 1 bis 5, **dadurch gekennzeichnet, dass** die inneren Wände der elementaren Senderinge (21) mit einem Fluid in flüssigem Zustand in Kontakt stehen.

8. Antenne nach Anspruch 7, **dadurch gekennzeichnet, dass** sie Öffnungen (41) beinhaltet, welche es Wasser, in welchem die Antenne (40) eingetaucht ist, ermöglicht, entlang der inneren Wände der elementaren Senderinge (21) zu zirkulieren.

9. Antenne nach Anspruch 8, **dadurch gekennzeichnet, dass** die Öffnungen (41) zwischen den Senderingen (21) angeordnet sind.

10. Tauchsonar (11), beinhaltend ein Kabel (13) und eine Antenne (14) nach einem der vorhergehenden Ansprüche, wobei die Antenne (14; 40, 50) an dem Kabel (13) aufgehängt ist.

11. Tauchsonar (11) nach Anspruch 10, **dadurch gekennzeichnet, dass** er zudem eine Winde (12) beinhaltet, welche es ermöglicht, das Kabel (13) aufzurollen und abzurollen.

12. Tauchsonar (11), beinhaltend einen Rechner (15) und eine Antenne (14) nach einem der Ansprüche 1 bis 9, wobei der Rechner (15) konfiguriert ist, um eine Sonarkanalbildung durchzuführen, wobei Parameter der Kanalbildung anhand der Kovarianz eines räumlich korrelierten Geräusches gemäß eines adaptativen und gegenüber von Kalibrierfehlern der Antenne (14) robusten Verarbeitungsformalismus berechnet werden.

**Claims**

1. An omnidirectional antenna intended to equip a dipping sonar (11), the antenna (14; 40, 50) comprising multiple elementary transmission rings (21) that are formed around a longitudinal axis (20) of the antenna (14; 40, 50) and multiple hydrophones (22) that are distributed around the longitudinal axis (20), the antenna (14; 40, 50) being intended to be dipped in water, the hydrophones (22) being separate from the elementary transmission rings (21), the hydrophones (22) and the elementary transmission rings (21) being fixed to one another in the antenna (14; 40; 50), wherein a first minimum cylindrical volume (23) around the longitudinal axis (20) occupied by the elementary transmission rings (21) has a diameter D1, a second minimum cylindrical volume (24) around the longitudinal axis (20) occupied by the hydrophones (22) has a diameter D2, wherein the diameter ratio of the two volumes is constant regardless of whether the antenna (14; 40, 50) is in operation or in a storage position, **characterized in that** the elementary transmission rings (21) and the hydrophones (22) are nested along the same height (H) measured according to the longitudinal axis (20) and **in that** the elementary transmission rings (21) and the hydrophones (22) operate at a working frequency of less than 8 kHz,
**in that** the difference in absolute value between the two diameters D1 and D2 remains inferior than 30% of the smaller of the two diameters D1 or D2,
and **in that** the projections from the phase centres of the hydrophones (22) in a horizontal plane (P) that is perpendicular to the longitudinal axis (20), or in a vertical plane (V) containing the longitudinal axis (20), are spaced apart by a spacing of less than λ/3, λ being the wavelength at the working frequency, the hydrophones (22) being distributed in rings formed around the longitudinal axis (20) in the horizontal plane (P), the spacing (p2), referred to as the horizontal spacing, between two hydrophones (22) is the length of the chord between two neighbouring hydrophones over the diameter in question.

2. The antenna according to claim 1, **characterized in that** the hydrophones (22) are arranged on bars (51) that are fixed to the transmission rings (21).

3. The antenna according to claim 1, **characterized in that** hydrophones (22) are distributed in rings that are formed around the longitudinal axis (20).

4. The antenna according to claim 3, **characterized in that** the elementary transmission rings (21) and the hydrophone rings (22) are arranged alternately along the height (H).

5. The antenna according to any one of claims 1 to 3, **characterized in that** the hydrophones (22) are superposed on the elementary transmission rings (21).

6. The antenna according to any one of claims 3 or 4, **characterized in that** the elementary transmission rings (21) and the hydrophone rings (22) form a tube (25) that extends along the longitudinal axis (20) between two ends (26, 27), **in that** the antenna (14, 40, 50) comprises two structures (28, 29) that close the tube (25), each at one of the ends (28, 29) of the tube (25).

7. The antenna according to any one of claims 1 to 5, **characterized in that** the inner walls of the elementary emission rings (21) are in contact with a fluid in the liquid state.

8. The antenna according to claim 7, **characterized in that** it comprises openings (41) allowing the water into which the antenna (40) is dipped to flow along inner walls of the elementary transmission rings (21).

9. The antenna according to claim 8, **characterized in that** the openings (41) are arranged between the transmission rings (21).

10. A dipping sonar (11) comprising a cable (13) and an antenna (14) according to any one of the preceding claims, the antenna (14; 40, 50) being suspended from the cable (13).

11. The dipping sonar (11) according to claim 10, **characterized in that** it additionally comprises a winch (12) that allows the cable (13) to be wound in and wound out.

12. The dipping sonar (11) comprising a computer (15) and an antenna (14) according to one of claims 1 to 9, the computer (15) being configured to carry out sonar beamforming, beamforming parameters being calculated on the basis of the covariance of a spatially correlated noise according to an adaptive processing formalism that is robust with respect to antenna (14) calibration errors.

FIG.1

FIG.2a

FIG.2b

FIG 2c

FIG 2d

FIG.3

FIG.4

## RÉFÉRENCES CITÉES DANS LA DESCRIPTION

**Documents brevets cités dans la description**

- US 2004052160 A1
- US 4305141 A
- FR 2604530 A1
- GB 2093996 A
- EP 0799097 B1

**Littérature non-brevet citée dans la description**

- **JIAN LEE.** On Robust Capon Beamforming and Diagonal Loading. *IEEE Transactions on signal processing,* 07 Juillet 2003, vol. 51 (7